# EUROPÄISCHE PATENTSCHRIFT

(11) **EP 4 568 904 B1**
(45) Veröffentlichungstag und Bekanntmachung des Hinweises auf die Patenterteilung: **04.03.2026**
(21) Anmeldenummer: 23757542.8
(22) Anmeldetag: 09.08.2023
(51) Int. Cl.: B65G 1/04

(54) **SHUTTLE UND REGALSYSTEM**
SHUTTLE AND RACKING SYSTEM
NAVETTE ET SYSTÈME DE RAYONNAGE

(30) Priorität: 11.08.2022 DE 102022002935
(43) Veröffentlichungstag der Anmeldung: 18.06.2025
(73) Patentinhaber: advastore SE, 83246 Unterwössen (DE)
(72) Erfinder: KOCH, Rupert, 83457 Bayerisch Gmain (DE); MEIRER, Leopold, 83246 Unterwössen (DE); DHOM, Maximilian, 83139 Söchtenau (DE)
(74) Vertreter: Müller Schupfner & Partner Patent- und Rechtsanwaltspartnerschaft mbB (Muc)
(86) Internationale Anmeldenummer: PCT/EP2023/072064
(87) Internationale Veröffentlichungsnummer: WO 2024/033420

(56) Entgegenhaltungen:
- WO-A1-2022/038459
- WO-A2-2015/038999
- CN-U- 211 809 085
- DE-A1- 102018 110 471
- US-A1- 2021 047 112
- US-B2- 11 390 504

## Beschreibung

Die vorliegende Erfindung betrifft ein Shuttle für ein passives Regalsystem und ein passives Regalsystem, insbesondere für ein Hochregallager.

Im Stand der Technik sind Regalbediengeräte wie Shuttles bekannt, die Waren in einem Regallager transportieren können. Hierbei ist es häufig so, dass das Regalbediengerät selbstständig nur in einer Horizontalrichtung verfahrbar ist. Zur Überwindung einer Höhendifferenz in einer Vertikalrichtung ist im Stand der Technik häufig ein externes Element wie beispielsweise ein Aufzug oder dergleichen notwendig, der das Regalbediengerät auf unterschiedliche Vertikalebenen bringen kann. Dadurch besteht jedoch die Gefahr, dass durch einen Defekt oder eine Fehlfunktion des Aufzugs der Betrieb eines solchen Regallagers beeinträchtigt wird. Zudem ist die Steuerung eines Aufzugs schwierig und fehleranfällig. Daher ist es wünschenswert, ein Regalbediengerät und ein Regalsystem zu schaffen, welche eine erhöhte Zuverlässigkeit und einfache Steuerung aufweisen.

Die US 111390504 B2 zeigt ein Shuttle **nach** dem Oberbegriff des Anspruchs 1.

Die WO 2022/038459 A1 zeigt einen automatisierten Träger mit Rädern für eine Bewegung auf einem Untergrund, sowie Zahnräder, um einen vertikalen Höhenunterschied in einem Regalsystem zu überwinden.

Die CN 211809085 U zeigt eine Transportvorrichtung mit einem Antriebsystem mit einem Kletterrad und mit einem Trägerrad.

Die US 2021 047 112 A1 zeigt ein Fahrzeug mit einem Vertikalantrieb und ein Horizontalantriebssystem.

Die vorliegende Erfindung löst dieses Problem mit einem Shuttle mit den Merkmalen des Anspruchs 1 und mit einem passiven Regalsystem mit den Merkmalen des Anspruchs 15.

Gemäß einem Aspekt der vorliegenden Erfindung wird ein Shuttle für ein Regalsystem bereitgestellt. Das Shuttle kann einen Ladebereich, der eine Ladefläche in einer ersten Richtung und in einer zweiten Richtung definiert umfassen. Der Ladebereich kann dazu ausgestaltet sein, zu transportierende Waren aufzunehmen. Das Shuttle kann eine Ladevorrichtung, die dazu ausgestaltet ist, Waren auf den Ladebereich zu bringen und von diesem entfernen, umfassen. Das Shuttle kann zumindest ein Antriebssystem mit einem Radsystem, welches um eine Raddrehachse drehbar ist, umfassen. Das zumindest eine Antriebssystem kann dazu ausgestaltet sein, das Shuttle in einer Horizontalrichtung und in einer Vertikalrichtung in dem Regalsystem zu bewegen.

Gegenüber dem bekannten Stand der Technik bietet das Shuttle gemäß einer Ausführungsform der vorliegenden Erfindung den Vorteil, dass sämtliche Funktionalitäten, welche für eine Bewegung des Shuttles in einer Vertikalrichtung und in einer Horizontalrichtung in einem Regalsystem notwendig sind, in dem Shuttle vorgesehen werden können. Mit anderen Worten eignet sich das Shuttle für den Betrieb in einem passiven Regalsystem, an welchem keine Vorrichtung vorgesehen sein muss, die für eine Überwindung eines Höhenabstands in der Vertikalrichtung zuständig ist. Vielmehr kann sich das Shuttle selbsttätig (d.h. durch eignen Antrieb) auf eine gewünschte Ebene in der Vertikalrichtung bewegen und sich ebenfalls horizontal in dieser Ebene fortbewegen. Dadurch kann das Gesamtsystem störunauffällig werden und eine Wartung erleichtert werden, da alle Funktionalitäten in dem Shuttle vereint sind. Mit anderen Worten kann das Regalsystem passiv (d.h. ohne aktive Steuerung) ausgestaltet sein. Somit kann eine Wartung und ein Betrieb eines solche Gesamtsystems (umfassend zumindest ein Shuttle und das Regalsystem) vereinfacht sein. Beispielsweise kann das Shuttle als einzelne Einheit viel leichter ausgetauscht oder repariert werden, wohingegen eine Reparatur an dem Regalsystem aufwendiger wäre.

Die Vertikalrichtung kann sich in der Schwererichtung erstrecken. Die Horizontalrichtung kann orthogonal zu der Vertikalrichtung ausgerichtet sein. Bei dem Shuttle kann es sich um ein Regalbediengerät handeln, das dazu eingerichtet ist, Waren in ein Regalsystem ein- und auszulagern. Dazu kann das Shuttle autonom betrieben sein. Das Shuttle kann sich selbsttätig fortbewegen. Der Ladebereich kann eine Fläche sein, auf der Waren angeordnet werden können. Beispielsweise kann der Ladebereich an zwei Seiten von jeweils einem Technikbereich umgeben sein. Der Technikbereich kann die nötige elektronische und/oder mechanische Bauteile zur Steuerung des Shuttles umfassen. Dadurch kann der Ladebereich besonders tief angeordnet sein, sodass es einfach ist, Waren aufzunehmen, und wieder abzugeben. Die Ladevorrichtung kann eine Vorrichtung sein, die Waren auf das Shuttle, (d. h. in den Ladebereich) befördern kann und von diesem wieder entfernen kann. Dazu kann die Ladevorrichtung die Waren greifen oder verschieben. Das Antriebssystem kann dazu ausgestaltet sein, auf Schienen, welche in dem Regalsystem vorgesehen sein können, zu fahren. Auf den Schienen kann sich das Shuttle vorzugsweise in der Horizontalrichtung fortbewegen. Ferner kann das Antriebssystem so ausgestaltet sein, dass es bei einem Zusammenwirken mit dem Regalsystem das Shuttle in der Vertikalrichtung bewegen kann. Dabei kann die Bewegung in der Vertikalrichtung genau orthogonal zu der Horizontalrichtung erfolgen. Mit anderen Worten kann sich das Shuttle strikt (d.h. ausschließlich) vertikal bewegen. Mit anderen Worten kann das Shuttle eine diagonale Bewegung mit Horizontal- und Vertikalanteilen vermeiden. Dadurch kann Raum eingespart werden, wodurch das Regalsystem besonders effizient ausgestaltet sein kann. Vorzugsweise weist das Shuttle vier Antriebssysteme auf. Das Shuttle kann in einer Draufsicht eine im Wesentlichen rechteckige Form aufweisen. An jeder Ecke des Shuttles kann ein Antriebssystem vorgesehen sein. Das Radsystem des Antriebssystems kann der sich drehende Teil des Antriebssystems sein, wenn sich das Shuttle in der Horizontalrichtung oder in der Vertikalrichtung fortbewegt. Der Ladebereich so ausgestaltet ist, dass die Waren direkt darauf transportiert werden können. Somit muss beispielsweise kein Transportbehälter oder dergleichen vorgehsehen sein, in welchen die zu transportieren Waren eingelegt werden müssten. Dies kann dadurch realisiert sein, indem der Ladebereich als eine ebene Fläche ausgestaltet ist, auf welche Waren jeglicher Größe oder Form angeordnet werden können. Die Waren können Artikel oder Gegenstände sein, die per Versand verschickt werden können. Die Waren können eine Vielzahl von Artikel aus verschiedensten Bereichen umfassen wie beispielsweise Bekleidungsartikel, Elektronikartikel, Heimwerkerbedarf, Lebensmittel, Sportartikel usw.. Aufgrund der unterschiedlichen Größe und Eigenschaften der einzelnen Artikel ist es vorteilhaft, dass der jeweilige Artikel direkt und ohne zusätzliche Transportvorrichtung durch das Shuttle aufgenommen werden kann und in dem Regalsystem ein- und ausgelagert werden kann.

Vorzugsweise weist das Radsystem einen Traktionsabschnitt zur Fortbewegung in der Horizontalrichtung und einen Eingriffsabschnitt zur Fortbewegung in der Vertikalrichtung auf. Der Traktionsabschnitt kann dabei so ausgestaltet sein, dass eine Traktion zwischen dem Traktionsabschnitt und einer Fahroberfläche wie beispielsweise einer Schiene, auf welchem sich das Shuttle fortbewegen kann, entsteht. Der Eingriffsabschnitt kann demgegenüber ein Abschnitt sein, der durch ein mechanisches Eingreifen zwischen dem Eingriffsabschnitt und einem korrespondierenden Abschnitt, wie beispielsweise einem Vertikalschienenabschnitt, welcher an einem Regal vorgesehen sein kann, das Shuttle in der Vertikalrichtung fortbewegen kann. Durch den Eingriffsabschnitt kann das Shuttle mechanisch in einen Vertikalschienenabschnitt eingreifen und dort gehalten sein. Wird das Radsystem dann drehend angetrieben, kann das Shuttle durch einen fortlaufenden Wechsel von Eingriffssituationen in der Vertikalrichtung nach oben oder nach unten bewegt werden. Dadurch kann ein sicherer Bewegungsablauf des Shuttles in der Vertikalrichtung bereitgestellt sein. Durch das Bereitstellen eines Traktionsabschnitts und eines Eingriffsabschnitts an dem Radsystem, kann eine horizontale und vertikale Fortbewegung des Shuttles durch nur ein Element sichergestellt sein. Mit anderen Worten kann eine Bewegung in der Vertikalrichtung und in der Horizontalrichtung durch das zumindest eine Antriebssystem bereitgestellt sein.

Vorzugsweise sind der Traktionsabschnitt und der Eingriffsabschnitt integral ausgebildet. Mit anderen Worten können der Traktionsabschnitt und der Eingriffsabschnitt aus einem Bauteil (d.h. einstückig) ausgebildet sein. Das kann bedeuten, dass der Traktionsabschnitt und der Eingriffsabschnitt nicht zerstörungsfrei voneinander lösbar sind. Somit kann eine besonders einfache Konfiguration bereitgestellt sein, der Traktionsabschnitt und der Eingriffsabschnitt nicht separat angetrieben werden müssen. Vielmehr kann ein gemeinsamer Antrieb genutzt werden, ohne dass beide Bauteile in einem separaten Arbeitsschritt miteinander verbunden werden müssten.

Vorzugsweise sind der Traktionsabschnitt und der Eingriffsabschnitt von einer gemeinsamen Antriebswelle antreibbar. Vorzugsweise ist der Traktionsabschnitt als ein Laufrad für eine Fortbewegung in der Horizontalrichtung ausgestaltet und vorzugsweise ist der Eingriffsabschnitt als ein Zahnrad für eine Fortbewegung in der Vertikalrichtung ausgestaltet. Der Traktionsabschnitt kann als ein Gummirad realisiert sein. Genauer gesagt kann das Laufrad eine Lauffläche aus Gummi umfassen. Dadurch kann das Shuttle vorteilhaft in der Horizontalen durch Antreiben des Radsystems bewegt werden. Das Zahnrad kann dazu ausgestaltet sein, mit einem korrespondierenden Element an dem Regalsystem in Wechselwirkung zu stehen, um das Shuttle in der Vertikalrichtung fortzubewegen. Durch den dadurch erreichbaren kontinuierlichen Eingriffszustand, kann das Shuttle sicher bei einer Fortbewegung in der Vertikalrichtung gehalten sein, selbst wenn es eine Ware geladen hat. Ferner ist durch eine definierte Umdrehung des Zahnrads eine genaue Position des Shuttles bei der Vertikalrichtung bestimmbar. Mit anderen Worten kann durch die Verwendung eines Zahnrads bei der Fortbewegung in der Vertikalrichtung ein Schlupf zwischen Radsystem und Regalsystem vermieden sein, wodurch die Position des Shuttles hoch genau bestimmt werden kann. Genauer gesagt kann die von dem Shuttle zurückgelegte Strecke durch die Anzahl der Umdrehungen des Radsystems bestimmt werden. Dadurch ist es besonders einfach das Shuttle zu steuern und zielgerichtet auf definierte Ebenen in der Vertikalrichtung zu steuern.

Vorzugsweise sind das Laufrad und das Zahnrad koaxial an dem Antriebssystem angeordnet. Mit anderen Worten können die Drehachsen des Laufrads und des Zahnrads deckungsgleich sein. Dadurch kann die Steuerung des Shuttles in einem horizontalen Fortbewegungsbetrieb und in einem vertikalen Fortbewegungsbetrieb gleich ausgestaltet sein. Die Drehachsen des Laufrads und des Zahnrads können beide durch den Schwerpunkt des Laufrads und des Zahnrads hindurchtreten. Dadurch kann die Steuerung des Shuttles insgesamt vereinfacht sein. Ferner kann eine Herstellung des Radsystems vereinfacht sein, da sowohl das Laufrad als auch das Zahnrad um dieselbe Drehachse drehbar sind.

Vorzugsweise sind das Laufrad und das Zahnrad von einer gemeinsam Antriebsquelle antreibbar. Mit anderen Worten kann für ein Laufrad und ein Zahnrad jeweils nur (d.h. ausschließlich) eine Antriebswelle vorgesehen sein. Mit anderen Worten ist damit gemeint, dass keine separaten Antriebswellen für das Laufrad und das Zahnrad vorgesehen sind. Dadurch kann Bauraum eingespart werden, da lediglich nur eine Antriebswelle vorgesehen ist. In einer bevorzugten Ausführungsform weist das Antriebssystem eine Antriebseinheit auf, welche direkt mit dem Radsystem in Kontakt ist. Mit anderen Worten kann das Radsystem direkt mit einem Elektromotor oder dergleichen verbunden sein. Dadurch kann das Antriebssystem zum einen leichter ansteuerbar sein und zum anderen können Kraftübertragungseinrichtungen wie z.B. eine Antriebswelle sehr einfach ausgestaltet sein, wodurch die Konfiguration des Antriebssystems besonders einfach realisiert werden kann. In einer weiteren bevorzugten Ausführungsform weist das Antriebssystem keine oder nur extrem kurze Antriebswelle auf, da der Elektromotor in dem Antriebssystem vorgesehen ist. Mit anderen Worten kann das Antriebssystem den Elektromotor umfassen. Somit kann eine hohe Effizienz beim Antrieb des Shuttles erreicht sein, da keine Übertragungsverluste aufgrund von Übertragungseinrichtung (wie beispielsweise eine Kupplung, Getriebe, Welle oder dergleichen) vorhanden sind. Ferner kann das Antriebssystem als kompakte Antriebseinheit realisiert sein.

Vorzugsweise weist das Shuttle ein Lenksystem auf, welches dazu ausgestaltet ist, das zumindest ein Antriebssystem um eine Antriebssystemdrehachse zu schwenken. Mit anderen Worten kann das Antriebssystem um die Antriebssystemdrehachse gedreht werden. Vorzugsweise ist das Lenksystem so ausgestaltet, dass das Antriebssystem in eine Horizontalfortbewegungsposition und in eine Vertikalfortbewegungsposition schwenkbar ist. Vorzugsweise ist die Ausrichtung des Antriebssystems in der Horizontalfortbewegungsposition in einem rechten Winkel zu dem Antriebssystem in der Vertikalfortbewegungsposition. Mit anderen Worten kann das Lenksystem so ausgestaltet sein, dass es das Antriebssystem in genau die zwei Positionen verschwenken kann. Mit anderen Worten kann das Antriebssystem um die Antriebssystemdrehachse um 90° ± 1° verschwenkbar sein. Damit eine weitere Verschwenkung verhindert werden kann, kann das Antriebssystem und/oder das Shuttle einen Anschlag aufweisen, welche dazu ausgestaltet ist, eine darüberhinausgehende Verschwenkung des Antriebssystems zu verhindern. Somit kann sichergestellt sein, dass das Antriebssystem in der Horizontalfortbewegungsposition eine andere Ausrichtung aufweist als in der Vertikalfortbewegungsposition. Mit anderen Worten kann der Horizontalfortbewegungsposition der Traktionsabschnitt mit beispielsweise einem Schienenabschnitt des Regalsystems zusammenwirken, um das Shuttle in der Horizontalrichtung fortzubewegen. Ferner kann in der Vertikalfortbewegungsposition der Eingriffsabschnitt mit einem korrespondierenden Element an dem Regalsystem (beispielsweise einer Zahnschiene) in Wechselwirkung stehen, um das Shuttle in der Vertikalrichtung fortzubewegen. Bei der Überführung des Antriebssystems von der Horizontalbewegungsposition in die Vertikalbewegungsposition kann das Antriebssystem um die Antriebssystemdrehachse gedreht werden, solange das Antriebsystem (z.B. der Traktionsabschnitt) mit der Fahroberfläche in Kontakt ist. Das Lenksystem kann zwei Führungsschienen aufweisen, die parallel zueinander angeordnet sind. Zwischen den zwei Führungsschienen kann eine Gewindespindel (auch als Bewegungsschrauben bezeichnet) vorgesehen sein. Ferner kann das Lenksystem einen Lenksystemantrieb umfassen, der eine Drehbewegung erzeugen kann. Durch die Gewindespindel kann eine rotatorische Bewegung des Lenksystemantriebs in eine translatorische Bewegung entlang der Führungsschienen erzeugt werden. Die Gewindespindel kann aus einer Gewindestange, also einem zylindrischen Rundstab, gebildet sein, auf welchen bei einer Ausführungsform ein Trapez- oder Flachgewinde aufgebracht ist. Ferner ist auch denkbar, eine Kugelgewindespindel oder eine Rollengewindespindel vorzusehen. Ferner kann das Lenksystem einen Sensor umfassen, der die Umdrehung der Gewindespindel messen kann, und somit die translatorische Bewegung bestimmen kann. Somit kann die Position des zumindest einen Antriebssystems hoch genau bestimmt werden. Ferner kann das Lenksystem ein Verschubelement aufweisen, welches durch die Gewindespindel in eine translatorische Bewegung versetzt werden kann. Ferner kann das Verschubelement an den beiden Führungsschienen gelagert sein. Dadurch kann eine definierte translatorische Bewegung des Verschubelements gewährleistet sein. An dem Verschubelement kann eine Lenkstange gelenkig gelagert sein, welche mit dem Antriebssystem in Verbindung steht. Vorzugsweise ist die Lenkstange so an dem Antriebssystem angeordnet, dass das Antriebssystem durch eine translatorische Bewegung des Verschubelements um die Antriebssystemdrehachse gedreht werden kann. In einer bevorzugten Ausführungsform wird die rotatorische Bewegung des Lenksystemantriebs auf zwei Gewindespindeln gleichzeitig bzw. synchron übertragen. Ferner kann das Lenksystem hierbei zwei Verschubelemente aufweisen, die jeweils von einer Gewindespindel translatorisch bewegt werden können. Demgemäß kann ein Lenksystem zwei Antriebssystemen zugeordnet sein. Mit anderen Worten kann durch Antreiben eines Lenksystemantriebs zwei Antriebssysteme synchron zueinander verschwenkt werden. Dadurch kann sichergestellt sein, dass zwei Antriebssysteme immer eine zueinander korrespondierende Position aufweisen. Mit anderen Worten kann somit sichergestellt sein, dass zumindest zwei Antriebssystem beide entweder in der Horizontalbewegungsposition oder in der Vertikalbewegungsposition positioniert sind. Folglich kann die Steuerung eines Lenkprozesses des Shuttles (bzw. der Antriebssysteme) vereinfacht sein.

Vorzugsweise ist die Antriebssystemdrehachse orthogonal zu der Raddrehachse. Beispielsweise kann sich bei einer Drehung des Antriebssystems um die Antriebssystemdrehachse gleichzeitig die Raddrehachse, um welche insbesondere der Traktionsabschnitt und der Eingriffsabschnitt drehbar sind, drehen. Somit kann der Wechsel zwischen einer Horizontalfortbewegungsposition und einer Vertikalfortbewegungsposition durch Drehen des Antriebssystems um die Antriebssystemdrehachse realisiert sein.

Vorzugsweise ist das Lenksystem dazu ausgestaltet, eine Vorspannkraft auf zumindest ein Antriebssystem aufzubringen. Mit anderen Worten kann das Antriebssystem so ausgestaltet sein, eine Kraft auf das Antriebssystem aufzubringen, welche einer Bewegung des Antriebssystems um die Antriebssystemdrehachse entgegenwirkt. Somit kann das Antriebssystem bei einer Fortbewegung des Shuttles in der Horizontalfortbewegungsrichtung stabilisiert werden und ein Flattern des Antriebssystems vermieden werden. Somit können mit dem Shuttle besonders hohe Geschwindigkeiten erreicht werden, sodass ein effizienter Betrieb eines Regalsystems gewährleistet ist. Ferner kann in dem Fall, bei dem das Regalsystem eine Zahnschiene aufweist, in welche das Zahnrad des Antriebssystems bei einer Vertikalfortbewegung des Shuttles eingreift, sichergestellt sein, dass eine Erstverzahnung zwischen Antriebssystem (bzw. Radsystem) und der Zahnschiene des Regalsystems problemlos funktioniert. So kann beispielsweise bei Aufeinandertreffen von einem Zahn des Zahnrads und einem Zahn der Zahnschiene das Lenksystem so elastisch ausgestaltet sein, dass ein sanftes Einklemmen bzw. Eingleiten des Zahnrads und der Zahnschiene gewährleistet sein kann. Dies kann beispielsweise durch ein Federelement, welches in dem Vorschubelement des Lenksystem angeordnet ist, realisiert sein. Es ist jedoch auch denkbar, dass jegliches anderes Element, welches eine elastische Lastaufnahme ermöglicht, in dem Lenksystem vorgesehen sein kann. So kann beispielsweise auch der Lenksystemantrieb ein solches elastisches Element in Form einer Spiralfeder oder dergleichen aufweisen. Ferner kann die Verbindung zwischen Gewindespindel und Verschubelement durch ein elastisches Element wie beispielsweise ein Elastomerelement realisiert sein. Bei dem vorliegenden Aspekt ist lediglich wichtig, dass eine Vorspannkraft auf das Antriebssystem durch das Lenksystem aufgebracht werden kann.

Vorzugsweise umfasst das Lenksystem zumindest ein Federelement, welches dazu ausgestaltet ist, die Vorspannkraft auf das Antriebssystem auszuüben. Das Federelement kann hierbei als elastisches Element, welches eine elastische Lastaufnahme ermöglicht, und als Vorspannelement, welches die Vorspannkraft auf das Antriebssystem ausüben kann, dienen. Durch die Doppelfunktion des Federelements kann eine einfache und kompakte Ausgestaltung des Lenksystems erreicht werden.

Vorzugsweise umfasst das Lenksystem einen Aktuator zur Erzeugung einer Kraft und ein Gestänge zur Übertragung der Kraft des Aktuators auf das zumindest eine Antriebssystem. Der Aktuator kann hierbei der Lenksystemantrieb sein. Das Gestänge kann die Führungsschienen und die Gewindespindel umfassen. Somit kann eine translatorische Bewegungskraft auf das Antriebssystem oder die Antriebssysteme aufgebracht werden, und das jeweils angesteuerte Antriebssystem und die Antriebssystemdrehachse gedreht bzw. geschwenkt werden.

Vorzugsweise umfasst das Shuttle zwei Lenksysteme, die jeweils mit zwei Antriebssystemen verbunden sind, wobei jedes Lenksystem vorzugsweise dazu ausgestaltet ist, jeweils zwei Antriebsysteme synchron zu steuern. Mit anderen Worten kann das Shuttle insgesamt vier Antriebssysteme (beispielsweise an jeder Ecke des Shuttles einen) umfassen. Zwischen zwei Antriebssystemen kann jeweils ein Lenksystem vorgesehen sein, welches mit den zwei Antriebssystemen verbunden sein kann. Somit können jeweils zwei Antriebssysteme des Shuttles synchron durch zwei Lenksysteme um die jeweilige Antriebssystemdrehachse geschwenkt werden. Dadurch kann eine Steuerung des Shuttles vereinfacht sein.

Vorzugsweise weist das Antriebssystem zumindest eine Antriebssystem-Führungsrolle auf, welche um eine erste Führungsrollendrehachse drehbar ist. Die Antriebssystem-Führungsrolle kann dazu ausgestaltet sein, das Shuttle in einer Vertikalbewegungsrichtung gegenüber einem korrespondierenden Element an dem Regalsystem abzustützen. In dem Fall, bei dem mehrere Antriebssysteme an dem Shuttle vorgesehen sind, können die Antriebssystem-Führungsrollen so ausgestaltet sein, dass sich jeweils zumindest zwei Antriebssystem-Führungsrolle so an dem Regalsystem abstützen, dass das Shuttle in dem Regalsystem verspannt ist. Genauer gesagt kann so das Shuttle in einer Bewegung in der Vertikalbewegungsrichtung zuverlässig in dem Regalsystem gehalten sein, sodass das Antriebssystem des Shuttles zuverlässig der Vertikalbewegungsrichtung bewegen kann. Genauer gesagt kann somit sichergestellt sein, dass ein Zahnrad, welches mit einer korrespondierenden Zahnschienen an einem Regalsystem in Eingriff steht, nicht aus diesem Eingriffszustand herausfallen kann. Dazu kann die Antriebssystem-Führungsrolle an dem Antriebssystem vorgesehen sein und zusammen mit dem Antriebssystem um die Antriebssystemdrehachse verschwenkbar sein. Somit kann der Betrieb des Shuttles in dem Regalsystem problemlos sichergestellt sein.

Vorzugsweise ist die erste Führungsrollendrehachse orthogonal zu der Raddrehachse angeordnet. Mit anderen Worten ist die Antriebssystem-Führungsrolle so an dem Antriebssystem angeordnet, dass die erste Führungsrollendrehachse orthogonal zu der Raddrehachse ist. Somit kann sichergestellt sein, dass eine Bewegung des Shuttles in der Vertikalbewegungsrichtung sicher geführt sein kann. Somit kann das Shuttle nur noch in der gewünschten Vertikalbewegungsrichtung bewegt werden (solange die Antriebssysteme in der Vertikalbewegungsposition positioniert sind). Dadurch kann die Betriebssicherheit des Shuttles in einem Regalsystem weiter gesteigert sein.

Vorzugsweise weist das Shuttle zumindest ein Hubsystem auf, das dazu ausgestaltet ist, das Shuttle von einer Fahroberfläche anzuheben. Die Fahroberfläche kann beispielsweise ein Schienenabschnitt bzw. dessen Fahroberfläche sein, welcher in dem Regalsystem vorgesehen ist. Somit kann das Hubsystem vorzugsweise so vorgesehen sein, dass das Shuttle auf einem relativ zu dem Shuttle schmalen Schienenabschnitt angehoben werden kann. Vorzugsweise kann das Hubsystem dazu ausgestaltet sein, das Shuttle in der Vertikalbewegungsrichtung anzuheben, so dass das Radsystem den Kontakt mit dem Untergrund verliert. Mit anderen Worten kann das Hubsystem dazu ausgestaltet sein, das Shuttle zwischen einer Horizontalbewegungsposition und einer Schwenkposition, in welcher das Antriebssystem das Shuttle nicht mehr mit einer Fahroberfläche in Kontakt ist, zu überführen. Genauer gesagt kann das Hubsystem den Traktionsabschnitt, welcher mit einem Schienenabschnitt zusammenwirken kann, von dem Schienenabschnitt anheben. Dadurch kann das Antriebssystem vorteilhaft, um die Antriebssystemdrehachse geschwenkt werden, da der Traktionsabschnitt nicht mehr mit dem Schienenabschnitt des Regalsystems in Kontakt steht. Somit kann der Betrieb des Shuttles weiter in der Effizienz gesteigert sein.

Vorzugsweise umfasst das Hubsystem einen Aktuator zur Erzeugung einer Kraft, ein Gestänge und zumindest eine Hubeinheit. Vorzugsweise ist die Hubeinheit in einer dritten Richtung, welche orthogonal zu der ersten und/oder der zweiten Richtung ist, beweglich gehalten. Die Hubeinheit kann beweglich gelagert sein. Vorzugsweise ist das Gestänge dazu ausgestaltet, die Kraft des Aktuators auf die zumindest eine Hubeinheit zu übertragen, um die Hubeinheit in der dritten Richtung zu bewegen. Der Aktuator kann ein Hubsystemantrieb sein, der eine rotatorische Kraft erzeugt. Insbesondere über ein Getriebe kann die rotatorische Bewegung auf ein Hubsystemgestänge (d. h. das Gestänge) übertragen werden. Somit kann die rotatorische Bewegung des Hubsystemantriebs auf zumindest eine Hubeinheit übertragen werden. Die Hubeinheit kann dazu ausgestaltet sein, die rotatorische Bewegung, welche über das Hubsystemgestänge übertragen wird, in eine translatorische Bewegung in der dritten Richtung umzuwandeln. Somit kann durch eine Erfassung der Rotation des Hubsystemgestänges und/oder des Hubsystemantriebs die genaue Position der Hubeinheit bestimmt werden. Somit kann ein Anheben oder Absenken des Shuttles in der dritten Richtung genauestens gesteuert werden.

Vorzugsweise weist die zumindest eine Hubeinheit ein Steuerkurvenelement auf, in welchem das Gestänge mittels eines Nockens geführt ist. Mit anderen Worten kann an einem Ende des Hubsystemgestänges ein Nocken vorgesehen sein, der nicht rotationssymmetrisch um die Drehachse des Hubsystemgestänges ausgebildet ist. Der Nocken kann in einem Steuerkurvenelement geführt sein, sodass das Hubelement abhängig von der Winkelposition des Hubsystemgestänges eine bestimmte Position in der dritten Richtung aufweisen kann. Durch Kenntnis der Steuerkurve des Steuerkurvenelements sowie der genauen Erfassung der Umdrehungen der Hubeinheit kann somit ein genaues Anheben bzw. Absenken des Shuttles realisiert sein. Die Hubeinheit kann hierbei so geführt sein, dass sie sich lediglich in der dritten Richtung bewegen kann. Mit anderen Worten können alle anderen Freiheitsgrade durch die Führung der Hubeinheit blockiert sein.

Vorzugsweise weist die zumindest eine Hubeinheit eine Hubsystem-Führungsrolle auf, welche um eine zweite Führungsrollendrehachse drehbar ist. Die Hubsystem-Führungsrolle kann dazu ausgestaltet sein, das Shuttle in eine gewünschte Position auf dem Schienenabschnitt des Regalsystems zu bringen. Beispielsweise kann bei einem Übergang von zwei aneinander angrenzenden Schienenabschnitten (beispielsweise einem Schienenabschnitt eines Regalbereichs und einem Schienenabschnitt eines Steigerbereichs) die Hubsystem-Führungsrolle das Shuttle durch Kontakt mit einem Element (z.B. einem Führungselement) des Regalsystems optimal auf dem Schienenabschnitt positionieren. Somit kann ein problemloser Betrieb des Shuttles in einem Regalsystem gewährleistet sein, selbst in einem Fall, bei dem verschiedene Schienenabschnitte nicht optimal zueinander passen.

Vorzugsweise ist die zweite Führungsrollendrehachse parallel zu der Antriebssystemdrehachse. Somit kann sichergestellt sein, dass ein Kontakt zwischen der Hubsystem-Führungsrolle und einem Element des Regalsystems nicht zu einer bremsenden Wirkung bei der Horizontalfortbewegung des Shuttles führt, da die Rolle um die zweite Führungsrollendrehachse drehbar ist.

Vorzugsweise weist die Ladevorrichtung einen sich in der ersten Richtung erstreckenden Obertisch und ein sich in der zweiten Richtung erstreckendes Warenkontaktelement auf. Vorzugsweise ist das Warenkontaktelement an dem Obertisch beweglich festgelegt. Mit anderen Worten kann das Warenkontaktelement in den Ladebereich vorstehen. Demgegenüber kann der Obertisch den Ladebereich begrenzen. Das Warenkontaktelement kann in der ersten Richtung entlang des Obertischs bewegt werden. Dazu kann das Warenkontaktelement ein Warenkontaktelement-Antrieb aufweisen, welcher eine rotatorische Bewegung in eine translatorische Bewegung des Warenkontaktelements in der ersten Richtung umwandeln kann. Somit kann eine Ware aus dem Ladebereich herausgeschoben werden. Ferner kann eine Ware auf den Ladebereich geschoben werden.

Vorzugsweise ist der Obertisch so ausgestaltet, dass das Warenkontaktelement in der ersten Richtung beweglich ist. Dazu kann der Obertisch eine Führungsschiene aufweisen, an welcher das Warenkontaktelement verfahrbar ist. Ferner kann in oder an der Führungsschiene eine Zahnschiene vorgesehen sein, in welche ein drehend antreibbares Zahnrad des Warenkontaktelements eingreift. Somit kann das Warenkontaktelement entlang der Schiene verfahren werden.

Vorzugsweise ist der Obertisch relativ zu dem Ladebereich in der ersten Richtung verfahrbar. Mit anderen Worten kann der Obertisch sich über die gesamte Länge des Warenbereichs in der ersten Richtung erstrecken. Durch die Verfahrbarkeit kann der Obertisch über den Ladebereich hinausbewegt werden. Zusammen mit dem Obertisch kann also auch das Warenkontaktelement aus dem Ladebereich herausbewegt werden. Somit kann beispielsweise eine Ware, welche in einem Regalbereich liegt, von dem Obertisch zusammen mit dem Warenkontaktelement aufgenommen werden. Ferner kann eine Ware, welche sich in dem Ladebereich des Shuttles befindet, von dem Warenkontaktelement kontaktiert werden und anschließend durch eine Bewegung des Obertischs von dem Ladebereich in einen Regalbereich verschoben werden.

Vorzugsweise umfasst die Ladevorrichtung einen Mitteltisch, welcher relativ zu dem Ladebereich verfahrbar ist und an welchem der Obertisch verfahrbar festgelegt ist. Mit anderen Worten kann die Ladevorrichtung eine teleskopartige Ausfahrmöglichkeit des Obertischs und des Mitteltischs bereitstellen. Dadurch können Waren noch weiter in der ersten Richtung in einen Regalbereich eingelagert (d. h. verschoben) werden. Ferner kann das Shuttle kompakter ausgebildet sein, da die doppelte Länge des Ladebereichs in der ersten Richtung theoretisch als mögliche Reichweite des Shuttles bzw. der Ladevorrichtung bereitsteht.

Vorzugsweise weist der Obertisch an zumindest einem Ende in der ersten Richtung einen Greiffinger auf, welcher zwischen einer Greifposition und einer Stauposition beweglich ist. Somit kann der Greiffinger zwischen zwei Positionen hin und her beweglich sein. In der Greifposition, kann der Finger so ausgestaltet sein, dass er zusammen mit dem Warenkontaktelement eine Ware einklemmen kann, sodass diese zwischen Greiffinger und Warenkontaktelement eingeklemmt ist. Somit kann eine Ware zuverlässig gegriffen werden und in der ersten Richtung hin und her bewegt werden. In der Stauposition dagegen, kann der Greiffinger so angeordnet sein, dass er in der ersten Richtung mit dem Obertisch fluchtet. Somit kann der Obertisch problemlos an einer Ware vorbei verfahren werden, ohne dass der Greiffinger die Ware ungewollt verschiebt. Befindet sich der Obertisch dann neben der zu bewegenden Ware, kann der Greiffinger in die Greifposition verfahren werden, um die Ware zu hintergreifen. Anschließend kann der Obertisch wieder eingefahren werden und somit die Ware auf den Ladebereich befördern. Gemäß einem Aspekt der vorliegenden Erfindung kann das Warenkontaktelement zuvor noch so entlang des Obertischs in der ersten Richtung verfahren werden, dass die Ware zwischen dem Greiffinger und dem Warenkontaktelement eingeklemmt ist. Somit kann ein besonders sicherer Transport der Ware durch die Ladevorrichtung realisiert sein.

Vorzugsweise ist der Greiffinger gelenkig an dem Obertisch gelagert, sodass der Greiffinger schwenkbar ist. Demgemäß ist es denkbar, dass der Greiffinger durch eine an dem Obertisch befindliche Antriebseinheit zwischen der Greifposition und der Stauposition hin und her beweglich ist. Dies ermöglicht eine besonders einfache Ausgestaltung des Greiffingers beispielsweise als eine Metallplatte, welche gelenkig an dem Obertisch gelagert ist.

Vorzugsweise ist an beiden Enden in der ersten Richtung des Obertischs jeweils ein Greiffinger vorgesehen. Beide Greiffinger können identisch ausgestaltet sein. Mit anderen Worten kann das Warenkontaktelement zwischen zwei Greiffingern an dem Obertisch hin und her beweglich sein. Somit ist eine Ein- oder Auslagerung von Waren aus einem Regalbereich an beiden Seiten des Shuttles problemlos möglich. Mit anderen Worten ist es egal, an welcher Seite des Shuttles ein Regalbereich angrenzt, da die Fördervorrichtung eine Ware in beide Seiten in der ersten Richtung ein- und/oder auslagern kann.

Gemäß einem weiteren Aspekt der vorliegenden Erfindung wird ein passives Regalsystem, insbesondere für ein Hochregallager, bereitgestellt, wobei das Regalsystem umfasst: ein Shuttle gemäß einer der obigen Ausgestaltungen, ein Regalbereich mit zumindest zwei Regalböden an unterschiedlichen Vertikalpositionen, zumindest zwei Regalschienenabschnitte, welche jeweils entlang der zumindest zwei Regalböden verlaufen, wobei die Regalschienenabschnitte so ausgestaltet sind, dass sich das Shuttle horizontal auf der Regalschienenabschnitten fortbewegen kann, zumindest einen passiven Steigerbereich, der die Regalschienenabschnitte miteinander verbindet und so ausgestaltet ist, dass sich das Shuttle durch den Steigerbereich von einem Regalschienenabschnitt zu einem anderen Regalschienenabschnitt in der Vertikalbewegungsrichtung bewegen kann. Das Regalsystem kann ein Bereich sein, in welchem die Waren oder Artikel eingelagert werden können. Ferner kann das Regalsystem Transportabschnitte wie beispielsweise Regalschienenabschnitte aufweisen, welche dazu ausgestaltet sind, dem Shuttle zu ermöglichen, Waren automatisiert in den Regalbereich ein- und auszuführen. Die Regalböden des Regalsystems können dabei horizontale Strukturen sein, auf denen Waren abgelegt werden können. Dabei können die Regalböden parallel zu der Horizontalen sein. Ferner können die Regalböden übereinander (d.h. in der Schwererichtung oder der Vertikalrichtung) angeordnet sein. Mit anderen Worten können die Regalböden an unterschiedlichen Vertikalpositionen vorgesehen sein. Vorzugsweise weist das Regalsystem eine Vielzahl von Regalböden auf, die jeweils an unterschiedlichen Vertikalposition angeordnet sind. Jeder Regalboden kann eine Regalebene definieren, die eine vertikale Position definiert. Somit kann das Regalsystem eine Vielzahl von Regalebenen übereinander aufweisen. Die Regalböden können durch vertikale Stützpfeiler gehalten sein. Vorzugsweise sind die Regalböden im Wesentlichen eben ausgestaltet, sodass Waren problemlos darauf abgelegt werden können und in der abgelegten Position verbleiben. Eben bedeutet hierbei, dass keine Strukturen oder Unterteilungen an den Regalböden vorgesehen sind. Mit anderen Worten sind die Regalböden dazu ausgestaltet, Waren individuell darauf aufzunehmen. Somit ist keine vorherige Definition bestimmter Ablagebereiche notwendig, und Waren können völlig individuell auf den Regalböden abgelegt werden. Die Regalböden können eine durchgehende und flächige Ebene definieren, auf die Waren direkt (d.h. ohne Behälter oder dergleichen) abgelegt werden können. Vorzugsweise sind die Regalböden kontinuierlich und durchgehend ausgestaltet. Somit kann das Lager hoch effizient betrieben werden, da Waren individuell angrenzend an benachbarte Waren eingelagert werden können. Mit anderen Worten können Waren individuell nebeneinander und/oder hintereinander auf den Regalböden gelagert werden. Somit muss vorher nicht bestimmt werden, welche Waren in etwaige vorgeformte oder begrenzte Ablagebereiche des Regalbereichs einzulagern sind. Ferner kann das Regalsystem Waren ohne zusätzliche Transporteinrichtungen, wie Transportkisten oder dergleichen aufnehmen. Dadurch kann die Effizienz des Regalsystems weiter gesteigert sein.

Durch die Verwendung des Shuttles kann das Regalsystem völlig passiv ausgebildet sein. Mit anderen Worten kann keine aktive Steuerung des Regalsystems notwendig sein, um ein voll automatisiert des Regalsystems bereitzustellen. Genauer gesagt kann das Regalsystem durch das aktiv gesteuerte Shuttle so bedient werden, dass das Regalsystem keinerlei aktivgesteuerte Bewegung oder dergleichen ausführen muss. Vielmehr kann das Regalsystem passiv sein und lediglich auf bestimmte Interaktionen, welche von dem Shuttle bewirkt werden, gesteuert werden. Somit kann ein besonders robustes und einfach zu steuerndes Regalsystem bereitgestellt sein. Ferner können keine Fehlbedienungen durch Fehlsteuerung des Regalsystems vorkommen, da das Regalsystem nicht gesteuert werden muss. Somit kann eine Ausfallsicherheit des Regalsystems erhöht sein, wodurch stets ein sicheres Ein- und Auslagern von Waren ermöglicht ist.

Einzelne Aspekte oder Ausführungsformen können mit anderen Merkmalen oder Ausführungsformen kombiniert werden und so neue Ausführungsform bilden. Die im Zusammenhang mit den Merkmalen oder Ausführungsformen genannten Ausgestaltung und Effekte gelten analog auch für die neuen Ausführungsformen.

Im Folgenden werden zu bevorzugende Ausführungsform der vorliegenden Erfindung mit Bezug auf die beigefügten Figuren beschrieben.
- **Fig. 1**: ist eine schematische und perspektivische Ansicht eines Shuttles gemäß einer Ausführungsform der vorliegenden Erfindung.
- **Fig. 2**: ist eine schematische und perspektivische Ansicht eines Antriebssystems gemäß einer Ausführungsform der vorliegenden Erfindung.
- **Fig. 3**: ist eine schematische und perspektivische Ansicht eines Lenksystems gemäß einer Ausführungsform der vorliegenden Erfindung.
- **Fig. 4**: ist eine schematische und perspektivische Ansicht eines Hubsystems gemäß einer Ausführungsform der vorliegenden Erfindung.
- **Fig. 5**: ist eine schematische Ansicht der Funktionsweise eines Hubsystems gemäß einer Ausführungsform der vorliegenden Erfindung.
- **Fig. 6**: ist eine schematische Draufsicht auf einen Ladebereich eines Shuttles gemäß einer Ausführungsform der vorliegenden Erfindung.
- **Fig. 7**: ist eine schematische und perspektivische Ansicht einer Ladevorrichtung gemäß einer Ausführungsform der vorliegenden Erfindung.
- **Fig. 8**: ist eine schematische Draufsicht auf eine Ladevorrichtung gemäß einer Ausführungsform der vorliegenden Erfindung.
- **Fig. 9**: ist eine schematische und perspektivische Ansicht einer Ladevorrichtung gemäß einer Ausführungsform der vorliegenden Erfindung.
- **Fig. 10**: ist eine schematische und perspektivische Ansicht eines Regalsystems gemäß einer Ausführungsform der vorliegenden Erfindung.

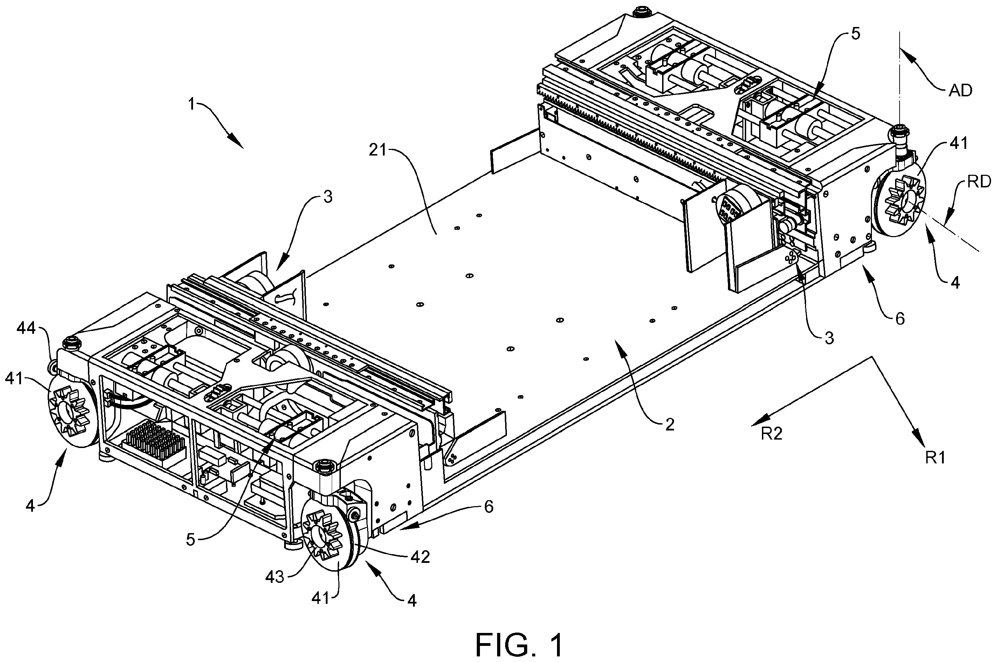

**Fig.** 1 ist eine schematische und perspektivische Ansicht eines Shuttles 1 gemäß einer Ausführungsform der vorliegenden Erfindung. Das Shuttle 1 oder auch Regalbediengerät ist bei der vorliegenden Ausführungsform ein autark steuerbares System, welches Waren in ein Regalsystem 100 (in Fig. 1 nicht dargestellt) ein- und/oder auslagern kann. Das Shuttle 1 weist bei der vorliegenden Ausführungsform in einer Draufsicht eine im Wesentlichen rechteckige Form auf. Ferner weist das Shuttle 1 einen Ladebereich 2 mit einer Ladefläche 21 zur Aufnahme der Waren oder Artikel auf. Die Ladefläche 21 ist an zwei Seiten durch jeweils eine Ladevorrichtung 3 begrenzt. An den beiden anderen Seiten ist die Ladefläche 21 geöffnet, um Waren auf die Ladefläche 21 ein- bzw. auszulagern. Die Ladevorrichtung 3 ist dazu ausgestaltet, Waren auf den Ladebereich 2 zu bringen und von diesem zu entfernen. Ferner weist das Shuttle zumindest ein Antriebssystem 4 mit einem Radsystem 41 auf, welches um eine Raddrehachse RD drehbar ist. Das Antriebssystem 4 ist dazu ausgestaltet, das Shuttle 1 in einer Horizontalrichtung HR und in einer Vertikalrichtung VR in dem Regalsystem 100 zu bewegen. Bei der vorliegenden Ausführungsform weist das Shuttle 1 vier identische Radsysteme 4 an jeweils einer Ecke des Shuttles auf. Ferner sind die Antriebssysteme 4, um eine Antriebssystemdrehachse AD schwenkbar. Genauer gesagt können die Antriebssysteme 4 von einer Horizontalfortbewegungsposition in eine Vertikalfortbewegungsposition geschwenkt werden. In Fig. 1 sind die auf der rechten Seite der Fig. dargestellten Antriebssysteme (es ist nur ein Antriebssystem sichtbar) in der Horizontalfortbewegungsposition angeordnet. Demgegenüber sind bei der in Fig. 1 dargestellten Ausführungsform die linken beiden Antriebssysteme 4 in der Vertikalbewegungsposition angeordnet. Somit können die Antriebssysteme um im Wesentlichen 90° geschwenkt werden, um von der Horizontalfortbewegungsposition in die Vertikalfortbewegungsposition oder andersherum verschwenkt zu werden.

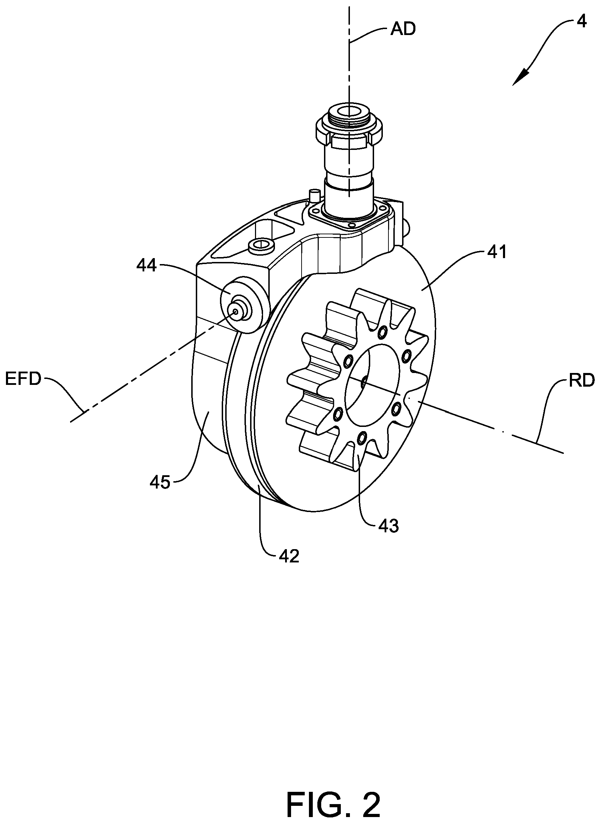

**Fig. 2** ist eine schematische und perspektivische Ansicht eines Antriebssystems 4 gemäß einer Ausführungsform der vorliegenden Erfindung. In Fig. 2 ist zu erkennen, dass das Radsystem 41 des Antriebssystems 4 einen Traktionsabschnitt 42 in Form eines Laufrads mit einer gummierten Lauffläche und einen Eingriffsabschnitt 43 in Form eines Zahnrads umfasst. Der Traktionsabschnitt 42 kann hierbei durch ein gummiertes Laufrad oder dergleichen gebildet sein. Ferner weist das Antriebssystem 4 ein Motorgehäuse 45 auf, in welchem eine Antriebseinheit für einen Antrieb des Radsystems 41 um die Raddrehachse RD aufgenommen ist. Das Motorgehäuse 45 ist dabei integral mit einer Halterung für das Radsystem 41 ausgebildet. Dadurch kann ein besonders kompaktes Antriebssystem 4 realisiert sein, welches problemlos um eine Antriebssystemdrehachse AD drehbar ist. Dazu kann das Antriebssystem 4 mit einem Zapfen mit dem Shuttle 1 verbunden oder verbindbar sein, sodass die Drehbarkeit des Antriebssystems 4, um die Antriebssystemdrehachse AD realisiert sein kann. Ferner weist das Antriebssystem 4 eine Antriebssystem-Führungsrolle 44 auf, welche in Form eines Radrings ausgebildet ist. Die Antriebssystem-Führungsrolle 44 ist dazu ausgestaltet, mit einem Element (beispielsweise einer Schiene oder einem Regalpfosten) des Regalsystems 100 zu wechselwirken, um das Shuttle 1 bei einer Vertikalbewegung zu stützen. Antriebssystem-Führungsrolle 44 ist dabei um eine erste Führungsrollendrehachse EFD drehbar.

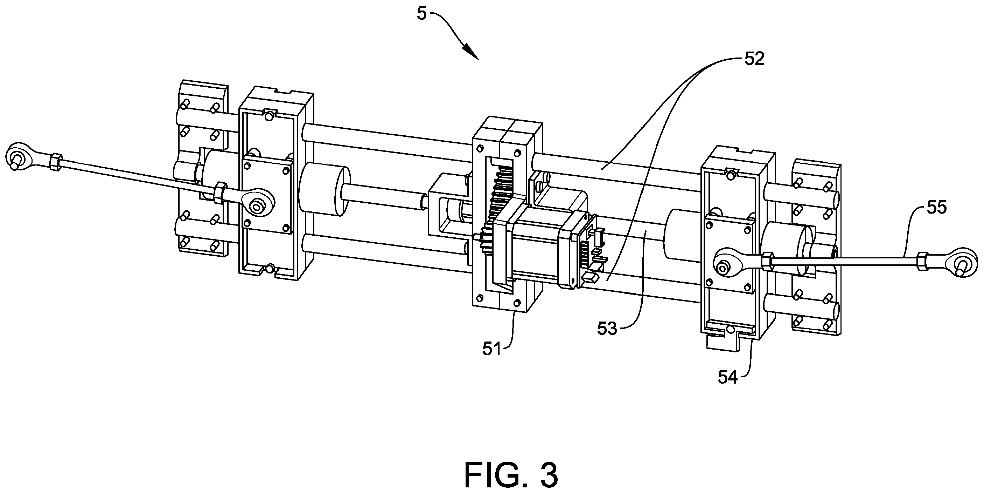

**Fig.** 3 ist eine schematische Darstellung eines Lenksystems 5, welches dazu ausgestaltet ist, zwei Antriebssysteme 4 des Shuttles 1, um die Antriebssystemdrehachse AD zu drehen. Bei der vorliegenden Ausführungsform weist das Shuttle 1 zwei Lenksysteme 5 auf, die jeweils zwei Antriebssysteme 4 betätigen können. Das Lenksystem 5 weist einen Lenksystemantrieb 51 auf, der eine rotatorische Bewegung erzeugen kann. Die rotatorische Bewegung wird mittels eines Getriebes auf eine Gewindespindel 53 aufgebracht. Durch die Gewindespindel 53 wird ein Verschubelement 54 translatorisch bewegt. Mit anderen Worten wird die rotatorische Bewegung des Lenksystemantriebs 51 in eine translatorische Bewegung des Verschubelements 54 umgewandelt. Das Verschubelement 54 ist dabei an zwei parallel zueinander verlaufenden Führungsschienen 52 gelagert. An dem Verschubelement 54 ist eine Lenkstange 55 angebracht, welche mit jeweils einem Antriebssystem 4 in Kontakt ist. Dabei ist die Lenkstange gelenkig an dem Verschubelement 54 und an dem Antriebssystem 4 gelagert. Somit kann eine Drehbewegung auf das Antriebssystem 4 ausgeübt werden, um dieses um die Antriebssystemdrehachse RD zu drehen. Vorzugsweise ist das Lenksystem 5 symmetrisch ausgestaltet, sodass zwei Antriebssysteme 4 durch nur einen Lenksystemantrieb 51 gedreht bzw. geschwenkt werden können. Dadurch kann eine synchrone Schenkung zweier Antriebssysteme gewährleistet sein.

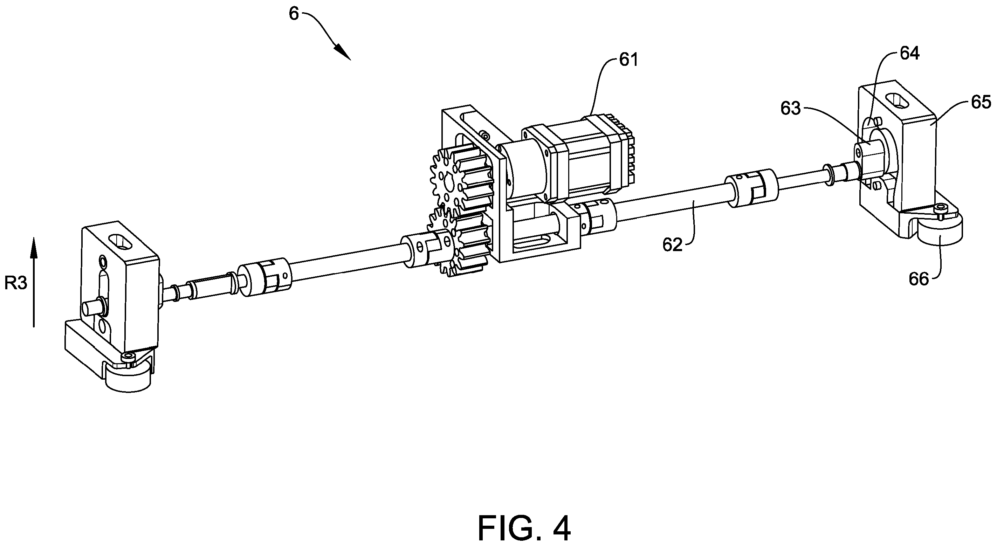

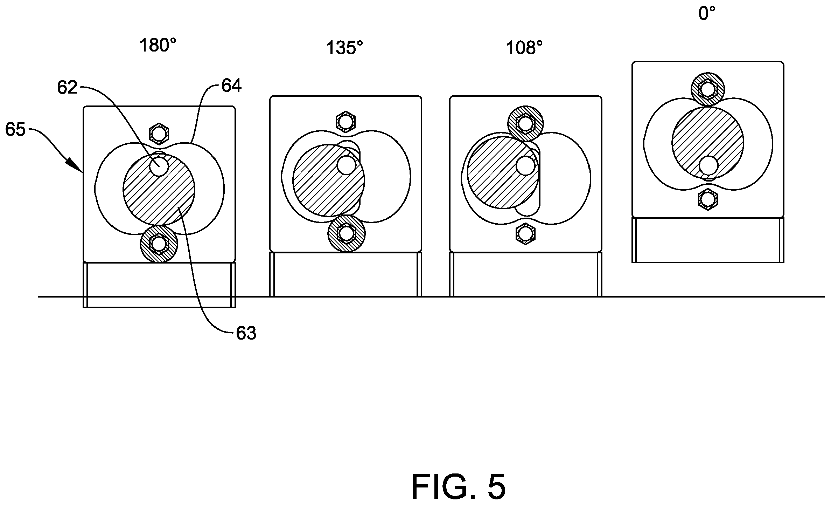

**Fig.** 4 ist eine schematische Ansicht eines Hubsystems 6 gemäß einer Ausführungsform der vorliegenden Erfindung. Das Hubsystem 6 ist dazu ausgestaltet, das Shuttle 1 von einer Fahroberfläche (beispielsweise von einem Schienenabschnitt) anzuheben. Bei der in Fig. 1 dargestellten Ausführungsform weist das Shuttle 1 zwei Hubsysteme 6 auf. Hierbei sind die Hubsysteme 6 in unmittelbarer Nähe zu den Antriebssystemen 4 angeordnet. Dadurch kann das Shuttle 1 so angehoben werden, dass die Antriebssysteme 4 problemlos in eine Antriebssystemdrehachse AD drehbar sind. Das Hubsystem 6 weist einen Hubsystemantrieb 61 auf, welcher eine rotatorische Bewegung erzeugen kann. Diese rotatorische Bewegung wird mittels eines Getriebes auf ein Hubsystemgestänge 62 übertragen. Dieses Hubsystemgestänge 62 treibt einen Nocken 63 drehend an. Der Nocken 63 ist durch ein Steuerkurvenelement 64 einer Hubeinheit 65 geführt. Ferner ist der Nocken 63 nicht an seinem Mittelpunkt (d. h. seinem Schwerpunkt) mit dem Hubsystemgestänge 62 verbunden. Somit kann durch ein drehendes Antreiben des Nockens 63 in Zusammenwirkung mit dem Steuerkurvenelement 64 die Hubeinheit 65 in der dritten Richtung R3 bewegt werden. Somit kann beispielsweise bei einer Drehung des Hubsystemgestänges 62 um 180° ein vorbestimmter Hub der Hubeinheit 65 realisiert sein. Somit kann das Shuttle 1 durch ein definiertes Antreiben des Hubsystemantriebs 61 um eine bestimmte Distanz von der Fahroberfläche angehoben werden. Genauere Details zu der Steuerkurve folgen im Zusammenhang mit der Beschreibung der Fig. 5. Ferner weist das Hubsystem 6 eine Hubsystem-Führungsrolle 66 auf, die dazu ausgestaltet ist, das Shuttle 1 insbesondere in der ersten Richtung R1 in eine optimale Position auf der Fahroberfläche zu bringen. So kann die Hubsystem-Führungsrolle 66 dafür sorgen, dass das Shuttle 1 stets mittig auf einer Fahroberfläche (beispielsweise einem Schienensystem) fährt.

Fig. 5 ist eine schematische Ansicht des Nockens 63 sowie der Hubeinheit 65, in welcher der Nocken 63 in Zusammenwirkung mit dem Steuerkurvenelement 64 geführt wird. In der ersten in Fig. 5 dargestellten Ansicht (Ansicht auf der linken Seite der Fig. 5) ist die Hubeinheit 65 so positioniert, dass das Shuttle nicht mit dem Antriebssystem 4 auf der Fahroberfläche steht, sondern mit der Hubeinheit 65. Bei dem vorliegenden Beispiel ist das Shuttle um vier mm von der Fahroberfläche angehoben. Dies ist ausreichend, um die Antriebssysteme 4 um die Antriebssystemdrehachse RD zu drehen, um von der Horizontalbewegungsposition in die Vertikalbewegungsposition zu kommen. Um diese Position zu erreichen, kann eine Winkelposition von 180° des Hubsystemgestänges 62 vorliegen. In dem zweiten folgenden Bild in Fig. 5 entspricht die Höhe der Hubeinheit 65 genau der Höhe des Antriebssystems 4. Das heißt, das Shuttle 1 steht sowohl auf der Hubeinheit 65 als auch auf dem Antriebssystem 4. Hierbei kann eine Fortbewegung des Shuttles 1 ohne eine darauf befindliche Ware ermöglicht sein. Die Winkelposition kann hierbei 135° betragen. In der nächsten in Fig. 5 dargestellten Darstellung (dritte Fig. von der linken Seite) befindet sich die Hubeinheit 65 in derselben Position wie bei der zuvor beschriebenen Position, mit dem Unterschied, dass die Winkelposition des Hubsystemgestänges 62 bei 108° liegt. Letztlich ist bei der auf der rechten Seite dargestellten Darstellung in Fig. 5 die Hubeinheit 65 von der Fahroberfläche angehoben, um auch einen Fortbewegungsprozess des Shuttles 1 mit einer darauf befindlichen Ware zu ermöglichen. Hierbei kann die Winkelposition des Hubsystemgestänges 62 0° betragen. Somit kann durch ein Drehen des Hubsystemgestänges 62 die Position der Hubeinheit 65 variabel realisiert sein.

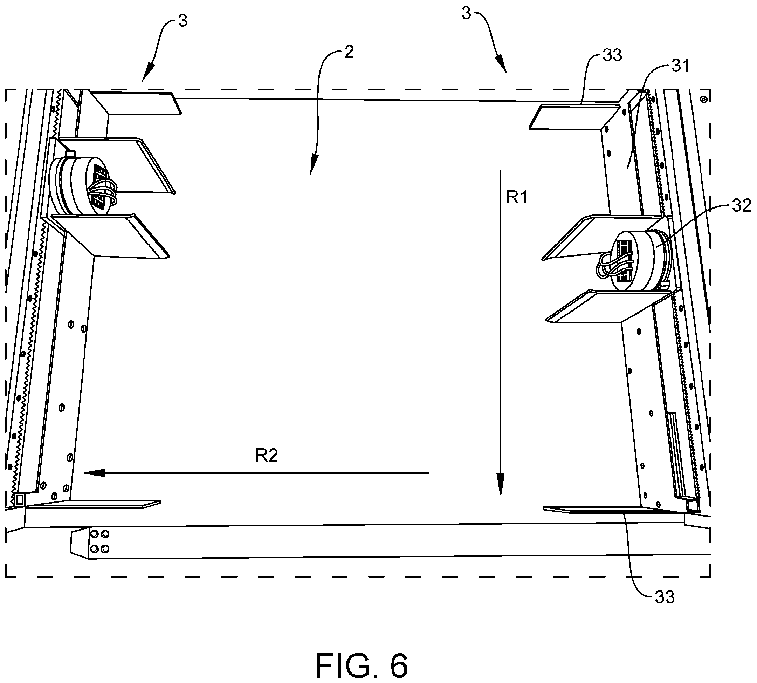

Fig. 6 ist eine schematische Draufsicht auf einen Ladebereich 2 eines Shuttles1 gemäß einer Ausführungsform der vorliegenden Erfindung. Der Ladebereich 2 ist in der zweiten Richtung R2 von jeweils einer Ladevorrichtung 3 begrenzt. Die Ladevorrichtung weist einen sich in erster Richtung R1 erstreckenden Obertisch 31 und ein sich in der zweiten Richtung R2 erstreckendes Warenkontaktelement 32 auf. Das Warenkontaktelement 32 ist beweglich an dem Obertisch 31 festgelegt und kann in der ersten Richtung R1 verfahren werden. Ferner weist die Ladevorrichtung 3 einen Greiffinger 33 auf, der nicht in der ersten Richtung beweglich ist. Vielmehr ist der Greiffinger 33 so verschwenkbar, dass er entweder in einer Position liegt, in der er in den Ladebereich 3 hineinragt oder in einer Position ist, in der er in der ersten Richtung mit dem Obertisch 31 fluchtet (d. h. nicht in den Ladebereich 3 hineinragt). Bei der vorliegenden Ausführungsform weist der Obertisch 31 an jeder Seite einen solchen Greiffinger 33 auf. Dadurch kann zu transportierende Ware zwischen dem Warenkontaktelement 32 und dem Greiffinger 33 eingeklemmt werden und somit auf dem Ladebereich 2 verschoben werden oder von dem Ladebereich 2 abtransportiert oder darauf transportiert werden.

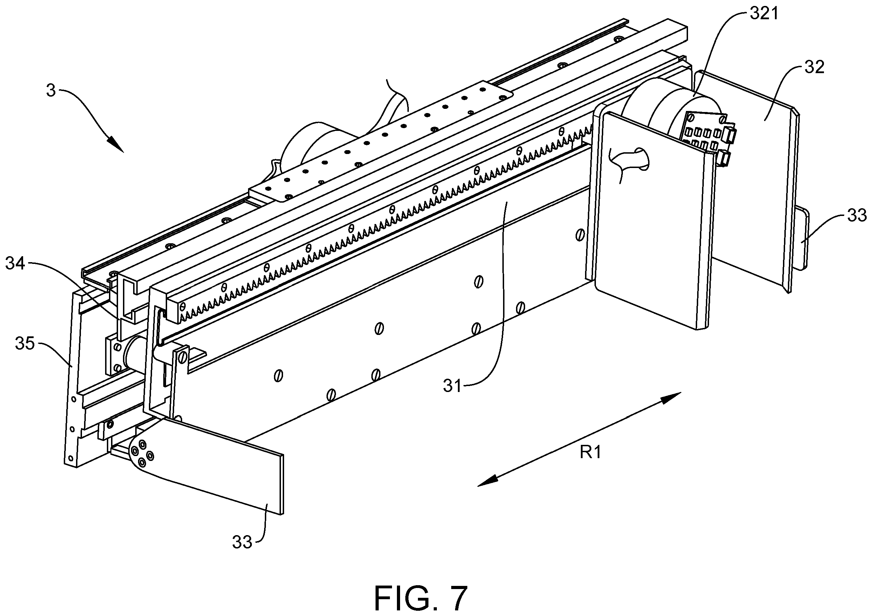

**Fig.** 7 ist eine schematische und perspektivische Ansicht einer einzelnen Ladevorrichtung 3, wie sie bei der in Fig. 1 dargestellten Ausführungsform des Shuttles 1 verbaut ist. Genauer gesagt sind zwei der in Fig. 7 dargestellten Ladevorrichtungen als Begrenzung des Lagerbereichs 2 an dem Shuttle 1 vorgesehen. In Fig. 7 ist erkennbar, dass das Warenkontaktelement 32 durch eine Warenkontaktelement-Antriebseinheit 321 entlang einer Zahnschiene in der ersten Richtung R1 entlang des Obertischs 31 beweglich ist. Der Obertisch 31 ist ferner relativ zu einem Mitteltisch 34 beweglich. Der Mitteltisch 34 ist dabei beweglich an einem Basistisch 35 gelagert. Somit kann die Fördereinheit 3 teleskopartig in der ersten Richtung R1 ausgefahren werden. Mit anderen Worten können der Obertisch und der Mitteltisch 34 in der ersten Richtung beliebig bzw. variabel ausgefahren werden.

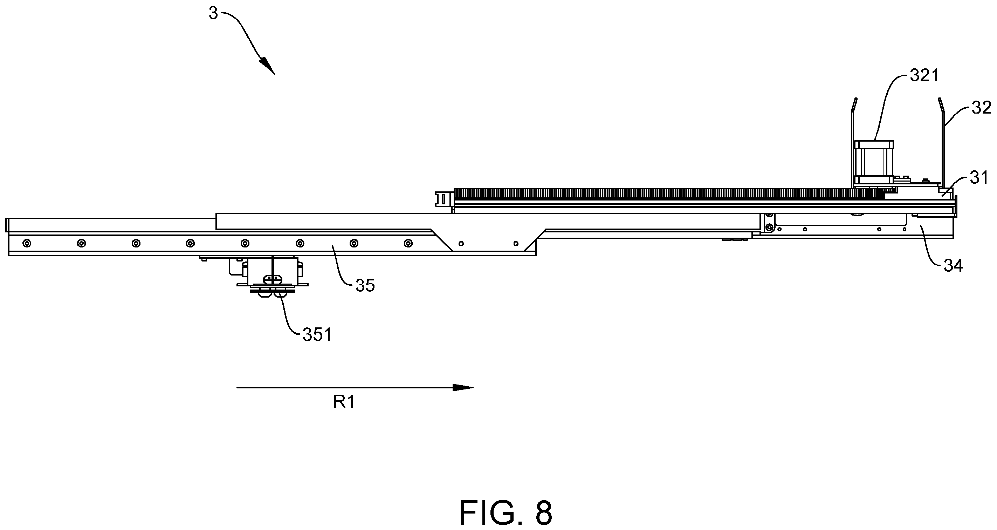

**Fig.** 8 ist eine schematische Draufsicht auf die Fördereinheit 3 in einem Zustand, bei dem der Obertisch 31 und der Mitteltisch 34 teleskopartig in der ersten Richtung ausgefahren sind. Der Mitteltisch 34 wird hierbei relativ zu dem Basistisch 35 bewegt.

Der Basistisch kann einen Basistischantrieb 351 aufweisen, welcher dazu ausgestaltet sein können, den Mitteltisch 34 und/oder den Obertisch 31 in der ersten Richtung R1 zu bewegen.

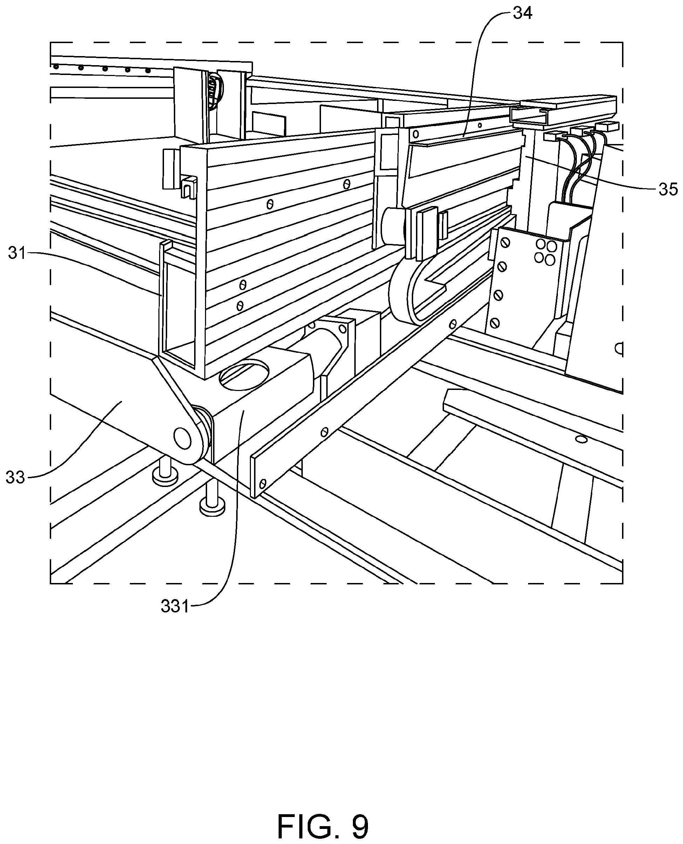

**Fig.** 9 ist eine schematische Teilansicht der Ladevorrichtung 3 in einem ausgefahrenen Zustand. Hierbei ist zu erkennen, dass der Obertisch 31 relativ zu dem Mitteltisch 34 verlagert ist. Ferner ist der Mitteltisch 34 relativ zu dem Basistisch 35 verlagert. Die Verlagerung findet hierbei in der ersten Richtung R1 statt. Am Obertisch 31 ist der Greiffinger 33 schwenkbar gelagert. Der Greiffinger 33 wird durch einen Greiffingerantrieb 331 von der Greifposition in die zurückgezogene Position bewegt. In einer zu bevorzugende Ausführungsform werden beide Greiffinger 33 eines Obertischs 31 synchron zueinander durch dieselbe Greiffingerantriebseinheit 331 bewegt.

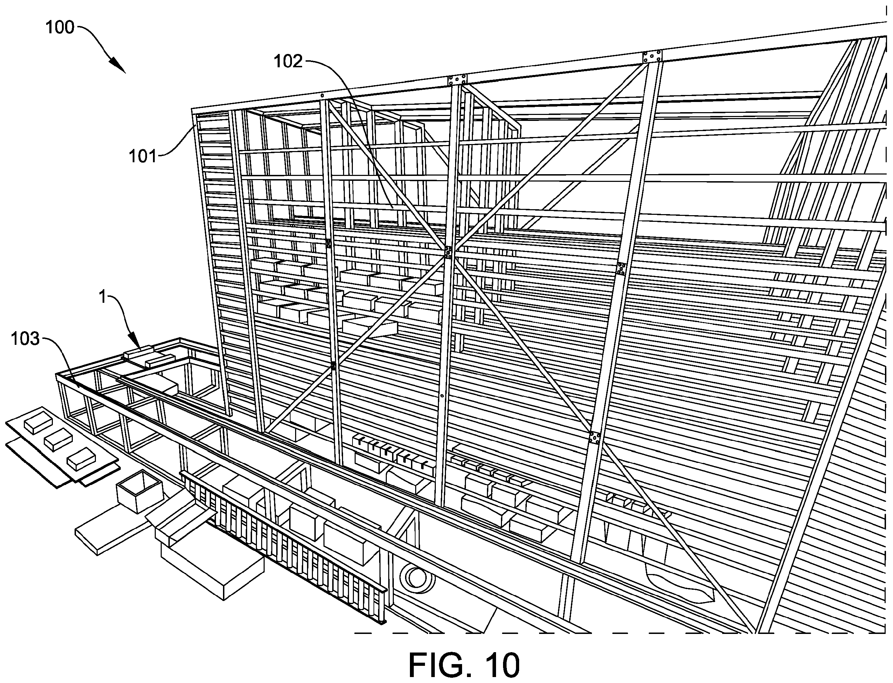

Fig. 10 ist eine schematische und perspektivische Ansicht eines passiven Regalsystems 100 gemäß einer Ausführungsform der vorliegenden Erfindung. Das Regalsystem 100 weist einen Steigerbereich 101 und einen Regalbereich 102 auf. Der Regalbereich 102 weist eine Vielzahl von Regalböden an unterschiedlichen Vertikalpositionen auf. Angrenzend zu den Regalböden sind Regalschienenabschnitte angeordnet, auf denen das Shuttle 1 fahren kann. Um die verschiedenen Ebenen zwischen den Regalböden zu erreichen, weist das Regalsystem einen Steigerbereich 101 auf. In dem Steigerbereich 101 kann sich das Shuttle 1 selbsttätig in der Vertikalrichtung bewegen. Vor dem Steigerbereich 101 ist eine Zulaufstrecke 103 angeordnet, über die das Shuttle 1 das Regalsystem 100 erreicht. Bei der vorliegenden Ausführungsform ist der Regalbereich 102 an dessen Enden jeweils durch einen Steigerbereich 101 begrenzt. Somit kann eine Art Kreisverkehr erreicht werden, in welchem eine Vielzahl von Shuttles 1 fahren kann, ohne sich gegenseitig zu behindern. Der Steigerbereich 101 weist vier Zahnschienen auf, mit denen das Antriebssystem (genauer gesagt das Zahnrad des Antriebssystems) in Eingriff gelangen kann. Durch einen Antrieb des Antriebsystems um die Raddrehachse kann sich das Shuttle 1 so in der Vertikalrichtung bewegen. Ist das Shuttle 1 an der gewünschten Ebene angekommen, kann es die Antriebssysteme 4 um die Antriebssystemdrehachse drehen so dass das Shuttle auf dem Traktionsabschnitt den Steigerbereich in einer horizontalen Richtung verlassen kann.

### Bezugszeichenliste:

- 1: Shuttle
- 2: Ladebereich
- 3: Ladevorrichtung
- 4: Antriebsystem
- 5: Lenksystem
- 6: Hubsystem
- 21: Ladefläche
- 31: Obertisch
- 32: Warenkontaktelement
- 321: Antriebseinheit
- 33: Greiffinger
- 331: Greiffingerantrieb
- 34: Mitteltisch
- 35: Basistisch
- 351: Basistischantrieb
- 41: Radsystem
- 42: Traktionsabschnitt
- 43: Eingriffsabschnitt
- 44: Antriebssystem-Führungsrolle
- 45: Motorgehäuse
- 51: Lenksystemantriebs
- 52: Führungsschienen
- 53: Gewindespindel
- 54: Verschubelement
- 55: Lenkstange
- 61: Hubsystemantrieb
- 62: Hubsystemgestänge
- 63: Nocken
- 64: Steuerkurvenelement
- 65: Hubeinheit
- 66: Hubsystem-Führungsrolle
- 100: Regalsystem
- 101: Steigerbereich
- 102: Regalbereich
- 103: Zulaufstrecke
- R1: erste Richtung
- R2: zweite Richtung
- R3: dritte Richtung
- AD: Antriebsystemdrehachse
- RD: Raddrehachse
- EFD: erste Führungsrollendrehachse

## Patentansprüche

1. Shuttle (1) für ein Regalsystem (100), umfassend,
einen Ladebereich (2), der eine Ladefläche (21) in einer ersten Richtung (R1) und in einer zweiten Richtung (R2) definiert, wobei der Ladebereich (2) dazu ausgestaltet ist, zu transportierende Waren aufzunehmen,
eine Ladevorrichtung (3), die dazu ausgestaltet ist, Waren auf den Ladebereich (2) zu bringen und von diesem zu entfernen,
zumindest ein Antriebssystem (4) mit einem Radsystem (41), welches um eine Raddrehachse (RD) drehbar ist, wobei das zumindest ein Antriebssystem (4) dazu ausgestaltet ist, das Shuttle (1) in einer Horizontalrichtung und in einer Vertikalrichtung in dem Regalsystem (100) zu bewegen,
wobei das Radsystem (41) einen Traktionsabschnitt (42) zur Fortbewegung in der Horizontalrichtung und einen Eingriffsabschnitt (43) zur Fortbewegung in der Vertikalrichtung aufweist und
**dadurch gekennzeichnet, dass**
das Shuttle (1) ein Lenksystem (5) aufweist, welches dazu ausgestaltet ist, das zumindest eine Antriebssystem (4) um eine Antriebsystemdrehachse (AD) zu schwenken.

2. Shuttle (1) gemäß Anspruch 1, wobei der Traktionsabschnitt (42) und der Eingriffsabschnitt (43) von einer gemeinsamen Antriebswelle antreibbar sind.

3. Shuttle (1) gemäß einem der Ansprüche 1 bis 2, wobei der Traktionsabschnitt (42) als ein Laufrad für eine Fortbewegung in der Horizontalrichtung ausgestaltet ist, und wobei der Eingriffsabschnitt (43) als ein Zahnrad für eine Fortbewegung in der Vertikalrichtung ausgestaltet ist.

4. Shuttle (1) gemäß einem der vorhergehenden Ansprüche, wobei das Lenksystem (5) ein Verschubelement (54) aufweist, welches durch eine Gewindespindel (53) in eine translatorische Bewegung versetzt werden kann.

5. Shuttle (1) gemäß einem der vorhergehenden Ansprüche, wobei das Lenksystem (5) zumindest ein Federelement umfasst, welches dazu ausgestaltet ist, die Vorspannkraft auf das Antriebssystem (4) auszuüben.

6. Shuttle (1) gemäß einem der vorhergehenden Ansprüche, wobei das Antriebssystem (4) zumindest eine Antriebssystem-Führungsrolle (44) aufweist, welche um eine erste Führungsrollendrehachse (EFD) drehbar ist.

7. Shuttle (1) gemäß einem der vorhergehenden Ansprüche, wobei das Shuttle (1) zumindest ein Hubsystem (6) aufweist, das dazu ausgestaltet ist, das Shuttle (1) von einer Fahroberfläche anzuheben.

8. Shuttle (1) gemäß einem der vorhergehenden Ansprüche,
wobei die Ladevorrichtung (3) einen sich in der ersten Richtung (R1) erstreckenden Obertisch (31) und ein sich in der zweiten Richtung (R2) erstreckendes Warenkontaktelement (32) aufweist, und
wobei das Warenkontaktelement (32) an dem Obertisch (31) beweglich festgelegt ist.

9. Shuttle (1) gemäß Anspruch 8, wobei der Obertisch (31) so ausgestaltet ist, dass das Warenkontaktelement (32) in der ersten Richtung (R1) beweglich ist.

10. Shuttle (1) gemäß Anspruch 8 oder 9, wobei der Obertisch (31) relativ zu dem Ladebereich (2) in der ersten Richtung (R1) verfahrbar ist.

11. Shuttle (1) gemäß einem der Ansprüche 8 bis 10, wobei die Ladevorrichtung (3) einen Mitteltisch (34), welcher relativ zu dem Ladebereich (2) verfahrbar ist und an welchem der Obertisch (31) verfahrbar festgelegt ist, umfasst.

12. Shuttle (1) gemäß einem der Ansprüche 8 bis 11, wobei der Obertisch (31) an zumindest einem Ende in der ersten Richtung (R1) einen Greiffinger (33) aufweist, welcher zwischen einer Greifposition und einer Stauposition beweglich ist.

13. Shuttle (1) gemäß Anspruch 12, wobei der Greiffinger (33) gelenkig an dem Obertisch (31) gelagert ist, sodass der Greiffinger (33) schwenkbar ist.

14. Shuttle (1) gemäß Anspruch 12 oder 13, wobei an beiden Enden in der ersten Richtung des Obertischs (31) jeweils ein Greiffinger (33) vorgesehen ist.

15. Passives Regalsystem (100), insbesondere für ein Hochregallager, umfassend:
ein Shuttle (1) gemäß einem der vorhergehenden Ansprüche,
einen Regalbereich (102) mit zumindest zwei Regalböden an unterschiedlichen Vertikalpositionen,
zumindest zwei Regalschienenabschnitte, welche jeweils entlang der zumindest zwei Regalböden verlaufen, wobei die Regalschienenabschnitte so ausgestaltet sind, dass sich das Shuttle (1) horizontal auf den Regalschienenabschnitten fortbewegen kann,
zumindest einen passiven Steigerbereich (101), der die Regalschienenabschnitte miteinander verbindet und so ausgestaltet ist, dass sich das Shuttle (1) durch den Steigerbereich (101) von einem Regalschienenabschnitt zu einem anderen Regalschienenabschnitt in einer Vertikalrichtung bewegen kann.

## Claims

1. Shuttle (1) for a shelving system (100), comprising,
a loading area (2) which defines a loading surface (21) in a first direction (R1) and in a second direction (R2), wherein the loading area (2) is designed to receive goods to be transported,
a loading device (3) which is designed to bring goods to the loading area (2) and remove them from it,
at least one drive system (4) with a wheel system (41) which is rotatable about a wheel rotation axis (RD), wherein the at least one drive system (4) is designed to move the shuttle (1) in a horizontal direction and in a vertical direction in the shelving system (100),
wherein the wheel system (41) has a traction section (42) for traveling in the horizontal direction and an engagement section (43) for traveling in the vertical direction, and
**characterized in that** the shuttle (1) has a steering system (5) which is designed to pivot the at least one drive system (4) about a drive system rotation axis (AD).

2. Shuttle (1) according to claim 1, wherein the traction section (42) and the engagement section (43) are drivable by a common drive shaft

3. Shuttle (1) according to any one of claims 1 to 2, wherein the traction section (42) is designed as an impeller for locomotion in the horizontal direction, and wherein the engagement section (43) is designed as a gear wheel for locomotion in the vertical direction.

4. Shuttle (1) according to any one of the proceeding claims, wherein the steering system (5) has a thrust element (54) which can be set into a translatory movement by a threaded spindle (53).

5. Shuttle (1) according to any one of the proceeding claims, wherein the steering system (5) comprises at least one spring element which is designed to exert the preload force on the drive system (4).

6. Shuttle (1) according to any one of the preceding claims, wherein the drive system (4) has at least one drive system guide roller (44) which is rotatable about a first guide roller rotation axis (EFD).

7. Shuttle (1) according to any one of the preceding claims, wherein the shuttle (1) has at least one lifting system (6) designed to lift the shuttle (1) from a driving surface.

8. Shuttle (1) according to any one of the preceding claims,
wherein the loading device (3) has an upper table (31) extending in the first direction (R1) and a goods contact element (32) extending in the second direction (R2), and
wherein the goods contact element (32) is movably fixed to the upper table (31).

9. Shuttle (1) according to claim 8, wherein the upper table (31) is designed such that the goods contact element (32) is movable in the first direction (R1).

10. Shuttle (1) according to claim 8 or 9, wherein the upper table (31) is movable relative to the loading area (2) in the first direction (R1).

11. Shuttle (1) according to any one of claims 8 to 10, wherein the loading device (3) comprises a center table (34) which is movable relative to the loading area (2) and to which the upper table (31) is movably fixed.

12. Shuttle (1) according to any one of claims 8 to 11, wherein the upper table (31) has a gripping finger (33) at at least one end in the first direction (R1), which is movable between a gripping position and a stowed position.

13. Shuttle (1) according to claim 12, wherein the gripper finger (33) is hingedly mounted on the upper table (31) so that the gripper finger (33) is pivotable.

14. Shuttle (1) according to claim 12 or 13, wherein a gripper finger (33) is provided at each end in the first direction of the upper table (31).

15. Passive shelving system (100), in particular for a high-bay warehouse, comprising:
a shuttle (1) according to any one of the preceding claims,
a shelf area (102) with at least two shelves at different vertical positions,
at least two shelf rail sections, which each run along the at least two shelves, wherein the shelf rail sections are designed in such a way that the shuttle (1) can move horizontally on the shelf rail sections,
at least one passive riser area (101), which connects the shelf rail sections to one another and is designed in such a way that the shuttle (1) can move through the riser area (101) from one shelf rail section to another shelf rail section in a vertical direction.

## Revendications

1. Navette (1) pour un système de rayonnage (100), comprenant
une zone de chargement (2) qui définit une surface de chargement (21) dans une première direction (R1) et dans une deuxième direction (R2), la zone de chargement (2) étant conçue pour recevoir les marchandises à transporter,
un dispositif de chargement (3) conçu pour déposer les marchandises dans la zone de chargement (2) et pour les retirer de celle-ci,
au moins un système d'entraînement (4) doté d'un système à roue (41) rotatif autour d'un axe de rotation de roue (RD), ledit au moins un système d'entraînement (4) étant conçu pour déplacer la navette (1) dans le système de rayonnage (100) dans une direction horizontale et dans une direction verticale,
le système à roue (41) comportant une section de traction (42) pour le déplacement dans la direction horizontale et une section d'engagement (43) pour le déplacement dans la direction verticale,
**caractérisée en ce que** la navette (1) possède un système de direction (5) conçu pour faire pivoter ledit au moins un système d'entraînement (4) autour d'un axe de rotation de système d'entraînement (AD).

2. Navette (1) selon la revendication 1,
dans laquelle la section de traction (42) et la section d'engagement (43) peuvent être entraînées par un arbre d'entraînement commun.

3. Navette (1) selon l'une des revendications 1 à 2,
dans laquelle la section de traction (42) est conçue comme une roue de roulement pour le déplacement dans la direction horizontale, et la section d'engagement (43) est conçue comme une roue dentée pour le déplacement dans la direction verticale.

4. Navette (1) selon l'une des revendications précédentes,
dans laquelle le système de direction (5) comprend un élément d'avancement (54) qui peut être mis en mouvement de translation par une broche filetée (53).

5. Navette (1) selon l'une des revendications précédentes,
dans laquelle le système de direction (5) comprend au moins un élément ressort conçu pour exercer une force de précontrainte sur le système d'entraînement (4).

6. Navette (1) selon l'une des revendications précédentes,
dans laquelle le système d'entraînement (4) comprend au moins un galet de guidage de système d'entraînement (44) qui peut tourner autour d'un premier axe de rotation de galet de guidage (EFD).

7. Navette (1) selon l'une des revendications précédentes,
dans laquelle la navette (1) comprend au moins un système de levage (6) conçu pour soulever la navette (1) d'une surface de déplacement.

8. Navette (1) selon l'une des revendications précédentes,
dans laquelle le dispositif de chargement (3) comprend une table supérieure (31) s'étendant dans la première direction (R1) et un élément de contact avec les marchandises (32) s'étendant dans la deuxième direction (R2), et
l'élément de contact avec les marchandises (32) est monté de manière mobile sur la table supérieure (31).

9. Navette (1) selon la revendication 8,
dans laquelle la table supérieure (31) est conçue de telle sorte que l'élément de contact avec les marchandises (32) est mobile dans la première direction (R1).

10. Navette (1) selon la revendication 8 ou 9,
dans laquelle la table supérieure (31) peut se déplacer par rapport à la zone de chargement (2) dans la première direction (R1).

11. Navette (1) selon l'une des revendications 8 à 10,
dans laquelle le dispositif de chargement (3) comprend une table intermédiaire (34) qui peut se déplacer par rapport à la zone de chargement (2) et sur laquelle la table supérieure (31) est montée de manière à pouvoir se déplacer.

12. Navette (1) selon l'une des revendications 8 à 11,
dans laquelle la table supérieure (31) comporte, à au moins une extrémité dans la première direction (R1), un doigt de préhension (33) qui est mobile entre une position de préhension et une position de rangement.

13. Navette (1) selon la revendication 12,
dans laquelle le doigt de préhension (33) est monté en articulation sur la table supérieure (31), de sorte que le doigt de préhension (33) peut pivoter.

14. Navette (1) selon la revendication 12 ou 13,
dans laquelle un doigt de préhension (33) respectif est prévu sur la table supérieure (31) à chacune des deux extrémités dans la première direction.

15. Système de rayonnage passif (100), en particulier pour un entrepôt à grande hauteur, comprenant :
une navette (1) selon l'une des revendications précédentes,
une zone de rayonnage (102) munie d'au moins deux tablettes à des positions verticales différentes,
au moins deux sections de rail de rayonnage qui s'étendant chacune le long desdites au moins deux tablettes, les sections de rail de rayonnage étant conçues de manière à permettre à la navette (1) de se déplacer horizontalement sur les sections de rail de rayonnage,
au moins une zone de montée passive (101) qui relie les sections de rail de rayonnage entre elles et qui est conçue de manière à permettre à la navette (1) de se déplacer d'une section de rail de rayonnage à une autre section de rail de rayonnage dans une direction verticale par l'intermédiaire de la zone de montée (101).
